# EUROPÄISCHE PATENTANMELDUNG

(11) **EP 1 388 505 A1**
(43) Veröffentlichungstag der Anmeldung: **11.02.2004**
(21) Anmeldenummer: 03016318.2
(22) Anmeldetag: 18.07.2003
(51) Int. Cl.: B65G 43/10, B65G 47/31

(54) **Lastabhängiger Asynchronantrieb für eine Förderstrecke**

(30) Priorität: 07.08.2002 DE 10236170
(71) Anmelder: SIEMENS AKTIENGESELLSCHAFT, 80333 München (DE)
(72) Erfinder: Brixius, Wolfgang, 91077 Neunkirchen A.Br (DE); Gräfer, Dominik, 90427 Nürnberg (DE); Hoene, Albrecht, Dr., 91074 Herzogenaurach (DE); Hoffmann, Gerhard, 90451 Nürnberg (DE); Junk, Rainer, Dr., 91091 Grossenseebach (DE); Spitzer, Günther, 96486 Lautertal (DE); Trautner, Friedrich, 91448 Emskirchen (DE)

(57) **Zusammenfassung**

Die Erfindung betrifft einen Antrieb einer aus einer Mehrzahl von Förderern (1, 2, 4) gebildeten Förderstrecke für Fördergüter (i), die mit einer vorgegebenen Fördergeschwindigkeit gefördert werden, wobei die einzelnen Förderer (1, 2, 4) von Asynchronmotoren (M) angetrieben sind, mit Sensoren (LS) zum Erfassen der Lastabhängigkeit der jeweiligen Fördergeschwindigkeiten der Förderer (1, 2, 4) und mit einer Regelung zum Ausgleichen von Geschwindigkeitsunterschieden. Um mit geringem Aufwand, kostengünstig und funktionssicher zu stark variierende Geschwindigkeiten und den dadurch bedingten Rückstaueffekt zu vermeiden, wird vorgeschlagen, dass mit den an den Förderern (1, 2, 4) angeordneten Sensoren (LS) jeweils der zeitliche Abstand unmittelbar benachbarter Fördergüter (i, i+1, i+1, i+2) während der Vorbeifahrt an einem Sensor (LS) oder jeweils die Laufzeit eines Fördergutes (i) auf einem Förderer (1, 2, 4) mittels Sensoren (LS) gemessen wird und dass der zeitliche Abstand bzw. die Laufzeit für die Ansteuerung des Asynchronmotors (M) des in Förderrichtung folgenden Förderers (2, 4) herangezogen wird, um Fördergeschwindigkeitsunterschiede auszuregeln.

## Beschreibung

Die Erfindung betrifft einen lastabhängigen Asynchronantrieb für eine Mehrzahl von Förderern, die zu einer aus einzelnen Förderern bestehenden Förderstrecke zusammengestellt sind und eine gemeinsame fördertechnische Anlage bilden, die zum Ansteuern der einzelnen Förderer mit einer entsprechenden Sensorik wie Lichtschranken, Lichttastern, induktiven Sensoren etc. ausgerüstet ist.

Bei der Verwendung von ungeregelten Asynchronmotoren besteht grundsätzlich das Problem, dass die Drehzahl dieser Antriebe lastabhängig ist. Somit ergibt sich bei der Anwendung von Asynchronmotoren in fördertechnischen Anlagen der Nachteil, dass die Fördergeschwindigkeit abhängig ist vom Gewicht der beförderten Fördergüter. Hieraus wiederum resultiert, dass sich unterschiedlich schwere Fördergüter beim Übergang von einem Förderer auf den nächsten in ihrem gegenseitigen Abstand zueinander verändern. Da die Verschiebung der Fördergüter zueinander auch aufgrund des in der Regel nicht bekannten Gewichtes nicht vorhersagbar ist, bilden die Verschiebungen Unsicherheiten, die bei der Ansteuerung und der Datenverfolgung berücksichtigt werden müssen. Diese Unsicherheiten beeinflussen die Größen wie Materialdurchsatz, Förderzeit, um eine geplante Strecke zurückzulegen, und die Datensicherheit negativ.

Nach dem heutigen Stand der Technik werden folgende Methoden eingesetzt, um o.g. Nachteile zu vermeiden:
a) Drehzahlrückführung: Hierbei wird die Motordrehzahl oder die Bandgeschwindigkeit messtechnisch erfasst und Abweichungen von der Sollgröße werden ausgeregelt. Hierdurch entsteht ein Mehraufwand für die Messtechnik und den Regler.
b) Verwendung von Servomaschinen: Hierbei werden Antriebe verwendetet, bei denen die Kennlinie so steil ist, dass Drehzahldifferenzen vernachlässigbar sind. Nachteil dieser Lösung ist ein erhöhter Kostenaufwand.
c) Verwendung von Synchronmaschinen: Für die Ansteuerung von Synchronmaschinen muss der Polradwinkel, d.h. die Läuferposition bekannt sein. Der Vorteil der Synchronmaschinen liegt darin, dass die Drehzahl synchron zum Vorgabewert ist. Der Nachteil liegt in der Rückführung der Läuferposition, was dem Aufwand einer Drehzahlrückführung im Fall a) ähnelt.
d) Verwendung elektronisch kommutierter Gleichstrommaschinen: Hier gilt analog das unter c) Gesagte. Zur Kommutierung muss die Läuferposition bekannt sein.

Aufgabe der vorliegenden Erfindung ist es, ausgehend von den beschriebenen Problemen und Nachteilen des Standes der Technik einen Antrieb der gattungsgemäßen Art für fördertechnische Anlagen zu schaffen, der mit geringem Aufwand, kostengünstig und funktionssicher zu stark variierende Geschwindigkeiten und den dadurch bedingten Rückstaueffekt ausschließt.

Zur Lösung dieser Aufgabe wird ein Antrieb vorgeschlagen, der durch die Maßnahmen des Patentanspruchs 1 gekennzeichnet ist. Günstige Ausgestaltungen sind in den Unteransprüchen 2 bis 6 beschrieben.

Die Erfindung verwendet also weiterhin die kostengünstigen Asynchronantriebe, so dass der Effekt der lastabhängigen Drehzahl, bei der die Drehzahl asynchron zum Vorgabewert ist grundsätzlich erhalten bleibt. Allerdings werden insbesondere die fördertechnischen Sensoren (Lichtschranken, Lichttaster, induktive Sensoren etc.) an den Förderern, die für die Ansteuerung der Förderer unabhängig von dem beschriebenen Problem vorhanden sind, dazu genutzt, die Auswirkungen der Lastabhängigkeit der Drehzahl zu erfassen, mit dem Ziel, den damit verbundenen Einfluss auf die Fördergeschwindigkeit über einen geschlossenen Regelkreis auszuregeln.

Erfindungsgemäß wird über die Sensoren des Förderers die Auswirkung der Lastabhängigkeit der Drehzahl anhand des zeitlichen Abstandes jeweils benachbarter Fördergüter während der Vorbeifahrt oder jeweils die Laufzeit eines Fördergutes auf einem Förderer gemessen. Dies kann beispielsweise durch einen Timer (Zeitzähler) erfolgen.

Vorteilhafterweise wird aus der gemessenen Zeitdifferenz bei Durchfahrt benachbarter Fördergüter durch eine einem Förderer zugeordneten Sensor die Basisgröße für die Ansteuerung eines Umrichters abgeleitet und für die Ansteuerung des Antriebsmotors dieses oder eines benachbarten Förderers herangezogen wird, um diesen über die Rückführung auf die Umrichterfrequenz und Umrichterspannung auszuregeln.

Es ist sinnvoll, wenn für jeden Förderer ein zeitlicher Sollabstand der Fördergüter vorgegeben wird, der abhängig ist von der Soll-Fördergeschwindigkeit, vom Durchsatz und der Länge des Förderers, wobei der tatsächliche Abstand über die Sensoren des Förderers gemessen wird und die Differenz als Regelabweichung (als Eingangsgröße) für den Regler verwendet wird.

Eine andere Lösung sieht vor, über die Sensoren des Förderers die Laufzeit des Fördergutes auf den Förderern zu messen. Da die Länge der Förderer bekannt ist, kann aus der Laufzeit die gefahrene Durchschnittgeschwindigkeit berechnet werden. Diese Geschwindigkeit ist die IST-Geschwindigkeit eines durchfahrenen Förderers. Die IST-Geschwindigkeit wird verglichen mit der Sollgeschwindigkeit. Die Differenz wird als Regelabweichung auf den Eingang des Regelalgorithmus's des nachfolgenden Förderers geschaltet. Als Regelalgorithmen können z.B. P-, PI-, PID-, alle Arten von Zweipunktreglern, nichtlineare Algorithmen etc. verwendet werden. Auf diese Weise wird der Einfluss von schwereren Fördergütern erfasst und durch die nachfolgenden Förderer ausgeregelt. Der Abstand der Fördergüter untereinander wird homogenisiert.

Die Vorteile gegenüber den bekannten Lösungen sind, dass kein zusätzlicher Sensoraufwand entsteht, weil die vorhandenen Sensoren verwendet werden können. Eine aufwändige Drehzahloder Positionsrückführung entfällt und es können kostengünstige Asynchronmotoren verwendet werden.

Der Zusatzaufwand durch zusätzliche Controller oder Steuerungen entfällt ebenfalls, da die Implementierung in der vorhandenen Förderersteuerung realisiert werden kann. Durch die Vermeidung von Rückstaueffekten entsteht ein höherer Durchsatz infolge der konstanten Fördergeschwindigkeit ohne ein Takten der Förderer. Der Verschleiß wird gesenkt, die Geräuschentwicklung verringert. Durch höhere Durchschnittsgeschwindigkeiten ergeben sich geringere Förderzeiten, der Energieverbrauch wird geringer.

Letztendlich besteht eine höhere Datensicherheit aufgrund des sichereren Datentrackings.

Ein Ausführungsbeispiel der Erfindung wird nachfolgend anhand einer schematischen Darstellung der Regelprinzipen sowie anhand der zugehörigen Regelkreisdarstellungen beschrieben.

Es zeigen:
- Fig. 1: die erfindungsgemäße Regelung der Fördergutabstände mit dem dazugehörenden Regelkreis zur Abstandsregelung,
- Fig. 2: den Regelkreis gemäß Fig. 1,
- Fig. 3: eine alternative Regelung der Fördergeschwindigkeit mit dem dazugehörenden Regelkreis zur Geschwindigkeitsregelung,
- Fig. 4:: den Regelkreis gemäß Fig. 3.

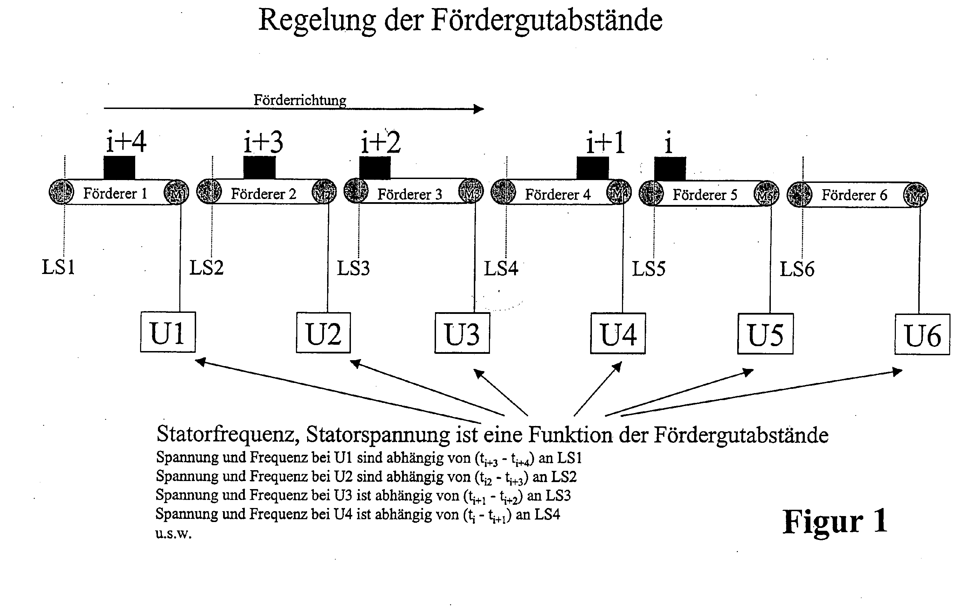

Fig. 1 zeigt beispielhaft die erfindungsgemäße Regelung anhand der Fördergutabstände. Dazu beginnt die Lichtschranke LS4 als Sensor des Förderers 4 die Zeitmessung bei Durchfahrt des Fördergutes i durch die Lichtschranke LS4 und endet bei der Durchfahrt des Fördergutes i+1 durch die Lichtschranke LS4. Diese gemessene Zeitdifferenz t(i+1) - t(i) ist die Basisgröße für die Ansteuerung des Umrichters U4, der seinerseits den Motor M4 ansteuert. Nach der Durchfahrt des Fördergutes i+1 beginnt die Zeitmessung sofort wieder und endet bei der Durchfahrt des Fördergutes i+2. Hieraus wird die Zeitdifferenz t(i+2) - t(i+1) berechnet, die für die Ansteuerung des Motors M4 herangezogen wird. Aus den jeweiligen gemessenen Zeitdifferenzen wird die Ansteuerung des Umrichters abgeleitet. Je größer die Zeitdifferenz ist, d.h. je größer der Abstand zweier Fördergüter ist, desto größer wird die Umrichterfrequenz und Umrichterspannung vorgegeben, mit dem Ziel, dass größere Abstände zwischen den Fördergütern ausgeglichen werden. Da größere Abstände zwischen den Fördergütern eine Folge davon sind, däss ein schwereres Fördergut (z.B. Fördergüter i, i+2) langsamer befördert wird als ein leichteres (z.B. Fördergut i+1) kann der Einfluss der Massen der Fördergüter durch die Abstandmessung erfasst werden und über die Rückführung auf die Umrichterfrequenz und Umrichterspannung ausgeregelt werden.

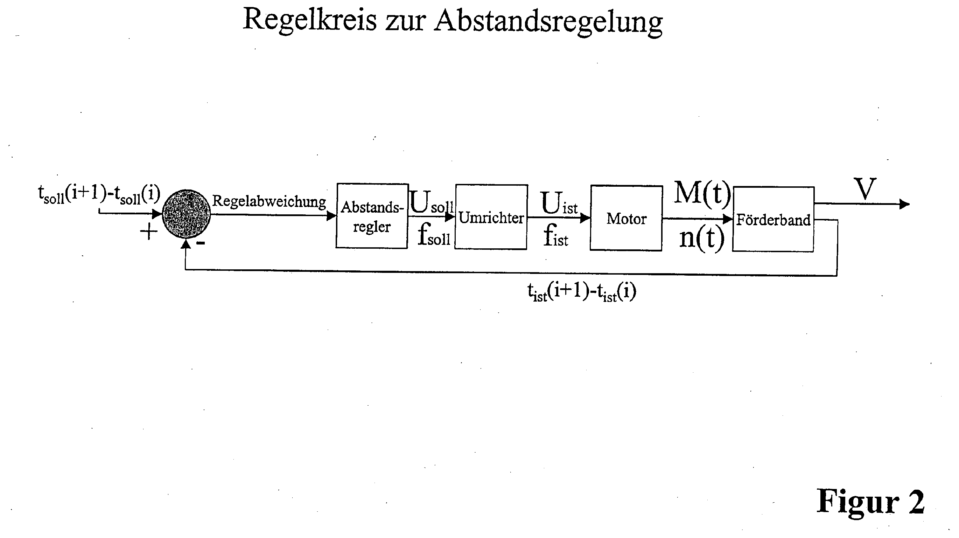

Fig. 2 erklärt den Regelkreis hierzu. Für jeden Förderer wird ein zeitlicher Sollabstand der Fördergüter vorgegeben, der abhängig ist von der Soll-Fördergeschwindigkeit und der Länge des Förderers, ggf. auch von den beabsichtigten Beschleunigungen und Verzögerungen. Der tatsächliche Abstand wird wie beschrieben gemessen. Die Regelabweichung ist Eingangsgröße für den Regler. Wird der Zeitabstand zu groß, wird die Fördergeschwindigkeit über eine Erhöhung der Umrichterfrequenz und Umrichterspannung erhöht und damit das gewichtsabhängige Absinken der Fördergeschwindigkeit ausgeglichen. Das Regeln auf konstante Fördergutabstände wirkt sich mittelbar auf eine Vergleichmäßigung der Fördergeschwindigkeit aus. Der Regler selbst kann als P-Regler oder auch als nichtlinearer Regler ausgeführt sein.

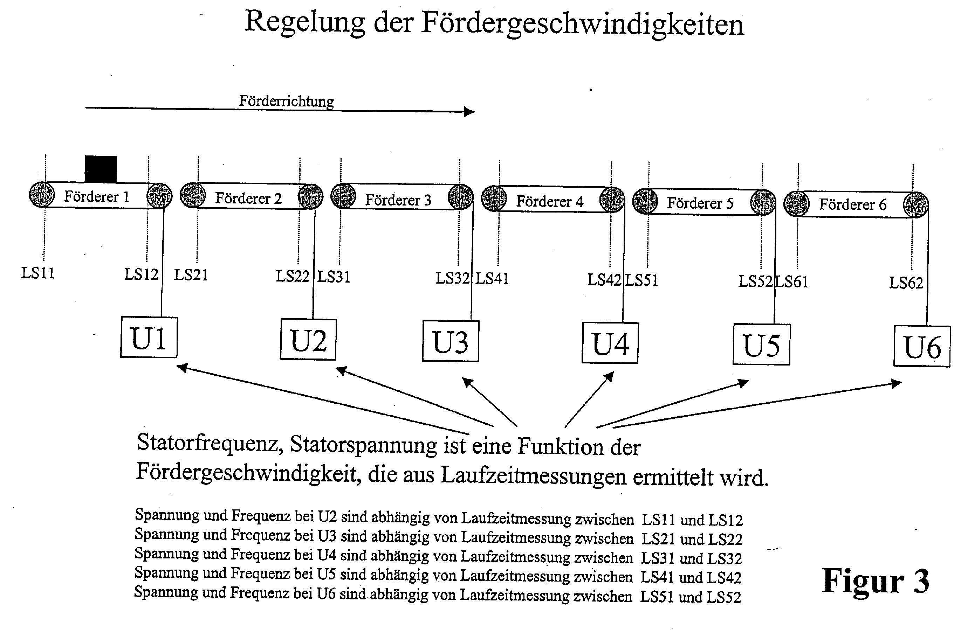

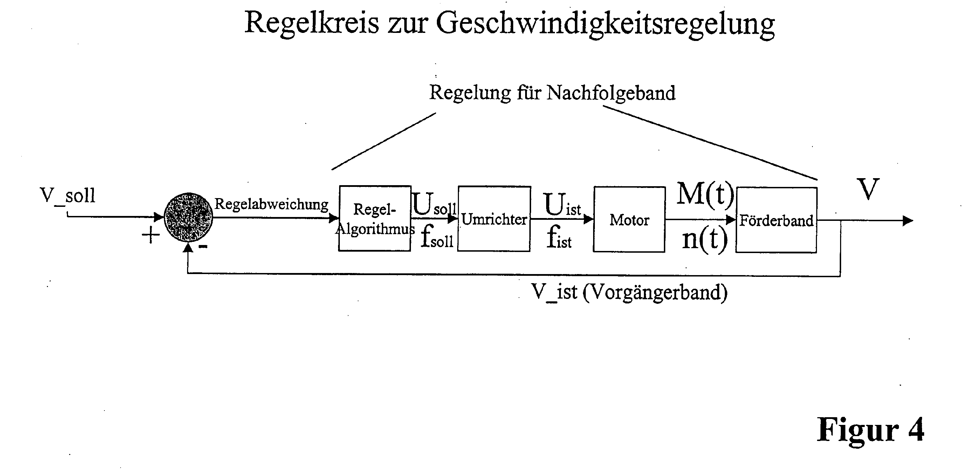

Die alternative Lösung, bei der über die Sensorik (Sensoren) des Förderers die Laufzeit des Fördergutes auf dem Förderer gemessen und aus der Laufzeit die gefahrene Durchschnittgeschwindigkeit berechnet wird, wird anhand von Fig. 3 kurz erklärt. Gemessen wird die Laufzeit des Fördergutes auf Förderer 1, zwischen den Lichtschranken LS11 und LS12. Aus dem Abstand der Lichtschranken zueinander wird die Geschwindigkeit des Fördergutes ermittelt. Für die Ansteuerung des Förderers 2 wird nun die Ist-Geschwindigkeit, die auf dem Förderer 1 erzielt wurde, verwendet. Es wird die Regelabweichung zur Sollgeschwindigkeit ermittelt und auf den Regler des Förderers 2 aufgeschaltet (Fig. 4). Fuhr das Fördergut auf Förderer 1 etwas zu langsam, so wird der Förderer 2 entsprechend dem implementierten Regelalgorithmus eine höhere Geschwindigkeit fahren. Der Regelvorgang setzt sich Förderer für Förderer fort. Die erreichte Geschwindigkeit des Vorgängerförderers wird als Korrekturgröße des Nachfolgeförderers verwendet. Prinzipiell kann auch das Verhalten auf den Vorvorgänger und den noch davor liegenden Vorgängern als Korrekturgröße verwendet werden. Diese Messwerte müssen im Regelalgorithmus dann entsprechend aufgenommen werden.

## Patentansprüche

1. Antrieb einer aus einer Mehrzahl von Förderern (1, 2, 4) gebildeten Förderstrecke für Fördergüter (i), die mit einer vorgegebenen Fördergeschwindigkeit gefördert werden,
wobei die einzelnen Förderer (1, 2, 4) von Asynchronmotoren (M) angetrieben sind,
mit Sensoren (LS) zum Erfassen der Lastabhängigkeit der jeweiligen Fördergeschwindigkeiten der Förderer (1, 2, 4) und mit einer Regelung zum Ausgleichen von Geschwindigkeitsunterschieden,
**dadurch gekennzeichnet,**
**dass** mit den an den Förderern (1, 2, 4) angeordneten Sensoren (LS) jeweils der zeitliche Abstand unmittelbar benachbarter Fördergüter (i, i+1; i+1, i+2) während der Vorbeifahrt an einem Sensor (LS) oder
jeweils die Laufzeit eines Fördergutes (i) auf einem Förderer (1, 2, 4) mittels Sensoren (LS) gemessen wird und
**dass** der zeitliche Abstand bzw. die Laufzeit für die Ansteuerung des Asynchronmotors (M) dieses oder des in Förderrichtung folgenden Förderers (2, 4) herangezogen wird, um Fördergeschwindigkeitsunterschiede auszuregeln.

2. Antrieb nach Anspruch 1,
**dadurch gekennzeichnet,**
**dass** der zeitliche Abstand bzw. die Laufzeit für die Ansteuerung des in Förderrichtung jeweils unmittelbar folgenden Förderers (2, 4) herangezogen wird.

3. Antrieb nach Anspruch 1 oder 2,
**dadurch gekennzeichnet,**
**dass** aus der Laufzeit des Fördergutes (i) auf den Förderern (1, 2, 4) die Durchschnittgeschwindigkeit berechnet wird, die als Ist-Geschwindigkeit mit einer festgelegten Sollgeschwindigkeit eines durchfahrenen Förderelementes verglichen wird, wobei die Differenz als Regelabweichung des nachfolgenden Förderers (2, 4) dient.

4. Antrieb einer aus einer Mehrzahl von Förderern (1, 2, 4) gebildeten Förderstrecke für Fördergüter (i), die mit einer vorgegebenen Fördergeschwindigkeit gefördert werden,
wobei die einzelnen Förderer (1, 2, 4) von Asynchronmotoren (M) angetrieben sind,
mit Sensoren (LS) zum Erfassen der Lastabhängigkeit der jeweiligen Fördergeschwindigkeiten der Förderer (1, 2, 4) und
mit einer Regelung zum Ausgleichen von Geschwindigkeitsunterschieden,
**dadurch gekennzeichnet,**
**dass** mit den Sensoren (LS), die in Förderrichtung gesehen im vorderen Bereich der Förderer (1, 2, 4) angeordnet sind, jeweils der zeitliche Abstand unmittelbar benachbarter Fördergüter (i, i+1; i+1, i+2) während der Vorbeifahrt an einem Sensor (LS) gemessen wird,
**dass** sich die beiden unmittelbar benachbarten Fördergüter (i, i+1; i+1, i+2) nach der Messung ihres zeitlichen Abstands jeweils noch auf demselben Förderer (1, 2, 4) befinden und
**dass** der zeitliche Abstand für die Ansteuerung des Asynchronmotors (M) dieses Förderers (1, 2, 4) herangezogen wird, um Fördergeschwindigkeitsunterschiede auszuregeln.

5. Antrieb nach einem der Ansprüche 1 - 4,
**dadurch gekennzeichnet,**
**dass** aus dem zeitlichen Abstand die Basisgröße für die Ansteuerung eines Umrichters (U) abgeleitet wird, um diesen über die Umrichterfrequenz und Umrichterspannung auszuregeln.

6. Antrieb nach einem der Ansprüche 1 - 5,
**dadurch gekennzeichnet,**
**dass** für jeden Förderer' (1, 2, 4) ein zeitlicher Sollabstand der Fördergüter (i) vorgegeben wird, der abhängig ist von der vorgegebenen Fördergeschwindigkeit und der Länge des Förderers (1, 2, 4), und dass der tatsächliche Abstand über den Sensor (LS) des Förderers (1, 2, 4) gemessen wird und die die Regelabweichung bildende Abstandsdifferenz als Eingangsgröße für die Regelung verwendet wird.

7. Antrieb nach einem der Ansprüche 1 - 6,
**dadurch gekennzeichnet,**
**dass** zusätzlich Beschleunigungen und Verzögerungen des Fördergutes (i) berücksichtigt werden

8. Antrieb nach einem der Ansprüche 1 - 7,
**dadurch gekennzeichnet,**
**dass** der Regler als P-, PI-, PID-Regler, als Zweipunktregler oder als nichtlinearer Regler ausgeführt ist.
